# EUROPEAN PATENT SPECIFICATION

(11) **EP 2 722 652 B1**
(45) Date of publication and mention of the grant of the patent: **06.06.2018**
(21) Application number: 12772186.8
(22) Date of filing: 20.07.2012
(51) Int. Cl.: G01F 1/66

(54) **ULTRASONIC FLOWMETER AND ULTRASONIC FLOW MEASURING METHOD**
ULTRASCHALL-DURCHFLUSSMESSER UND ULTRASCHALL- DURCHFLUSSMESSVERFAHREN
DÉBITMÈTRE À ULTRASONS ET PROCÉDÉ DE MESURE D'UN DÉBIT PAR ULTRASONS

(30) Priority: 13.06.2012 CN 201210194469
(43) Date of publication of application: 23.04.2014
(73) Proprietor: Basic Intelligence Technology Co., Ltd., Guangzhou P.R.C., 510663 (CN)
(72) Inventor: TAN, Wensheng, Guangzhou P.R.C., 510663 (CN)
(74) Representative: Haseltine Lake LLP
(86) International application number: PCT/CN2012/078915
(87) International publication number: WO 2013/185406

(56) References cited:
- EP-A1- 0 268 314
- EP-A1- 0 559 938
- WO-A1-02/44662
- CN-A- 1 478 194
- CN-A- 101 084 415
- CN-A- 101 858 762
- CN-A- 102 288 236
- CN-A- 102 435 231
- CN-U- 201 555 623
- CN-U- 201 589 631
- CN-U- 201 622 086
- CN-U- 201 740 552
- CN-U- 201 811 811
- CN-U- 202 092 691
- CN-U- 202 209 967
- CN-Y- 201 210 067
- DE-A1- 2 461 403
- DE-A1- 3 544 456
- DE-B3- 10 327 076

## Description

### FIELD OF THE INVENTION

The present invention relates to an ultrasonic flow sensor and a method for ultrasonic flow measurement.

### BACKGROUND OF THE INVENTION

Normally, an ultrasonic flow sensor has two mounting holes in a pipe body, and each mounting hole is equipped with an ultrasonic detecting element. Signal reflecting units are provided in the pipe body. Ultrasonic signal emitted from a first ultrasonic detecting element is transmitted to a second ultrasonic detecting element through the signal reflecting units. Based on the distance between the two ultrasonic detecting elements and the time that it takes for the ultrasonic signal to be transmitted between the two ultrasonic detecting elements, the liquid flow cross the pipe body per unit time is measured.

Furthermore, ultrasonic flow sensors are normally equipped with signal reflecting units in the pipe body, a first ultrasonic transducer converts the electrical signal to an ultrasonic vibration signal, and after entering through a first mounting hole and reflected by a first signal reflecting unit, such vibration signal is transmitted to a second signal reflecting unit along the axial direction, whereby the vibration signal is reflected and transmitted through a second mounting hole, and a second ultrasonic transducer converts the ultrasonic vibration signal to an electrical signal.

The existing structure has the following defects:
1. The signal transmission path of the ultrasonic flow sensor is U-shaped, and the ultrasonic signal in the pipe body is detected by the straight-line distance of a single segment, which can not accurately reflect fluid flow inside the entire pipe body, so that the accuracy is affected.
2. The U-shaped structure within the flow measurement pipe has large baffles, which cause a greater pressure loss on the pipeline; and if the fluid contains impurities, pipeline blockage can be caused.
3. Since the existing ultrasonic flow sensor only detects the straight-line distance of a single segment, therefore, in order to improve the accuracy of detection, the ultrasonic detecting elements should be close to the axis position of the pipe body, which will certainly affect the liquid flow inside the pipe body, make liquid turbulent flow more serious, and affect the accuracy of measurement.

Later, there is another ultrasonic flow sensor which is characterized by multiple reflections of ultrasonic signal and detection of straight-line distance of multiple segments in the pipe body, in order to improve the accuracy of measurement;
1. With the increase of the number of signal reflecting units, the attenuation of ultrasonic signal is also increasing; and if dusts or impurities are accumulated at the signal reflecting units, the attenuation of the signals will become more apparent, which will affect the reliability of the measurement.
2. On the other hand, with the increase of the number of signal reflecting units, considering the demands for the settings of reflection angle and the installation location, some signal reflecting units need to be settled at the top or bottom of the pipe body; and if the signal reflecting units are located on the top of the pipe body, the bubbles in the pipe body will affect the transmission of ultrasonic signal, but if the signal reflecting units are located at the bottom of the pipe body, the impurities accumulated at the signal reflecting units will also affect the transmission of ultrasonic signal.

Therefore, the existing ultrasonic flow sensors, on one hand, need to increase the number of straight-line segments through which an ultrasonic signal crosses to improve the accuracy of measurement, and on the other hand, need to decrease the reflection times of the ultrasonic signal, and reduce the attenuation and the loss of the ultrasonic signal in the transmission process. However, the existing ultrasonic flow sensors as e.g. disclosed by WO02/44662-A1 and CN201740552-U, can not solve those technical problems.

### SUMMARY OF THE INVENTION

Accordingly, it is the object of the present invention to overcome the defects of the existing technology to provide an ultrasonic flow sensor and a method for ultrasonic flow measurement. The present invention can be more accurate to detect the liquid flow and reduce the attenuation of the signals, and at the same time, this invention can reduce pressure loss of the flow sensor, so that the reliability is also improved.

The technical solutions are as follows:
An ultrasonic flow sensor comprises: a pipe body with two mounting holes;
two ultrasonic detecting elements mounted on the two mounting holes respectively; and
signal reflecting units provided inside the pipe body;
wherein an axis of each of the two ultrasonic detecting elements is inclined with respect to a cross-section of the pipe body perpendicular to an axis of the pipe body;
wherein, the pipe body further comprises: an outer pipe and an inner pipe located in the outer pipe, each of the signal reflecting units located on the inner wall of the inner pipe;
wherein the outer pipe is provided with a positioning hole which is provided with an adjusting screw, and the end of the adjusting screw is pressed on the inner pipe; and
wherein the outer wall of the inner pipe is provided with an adjusting annular groove, which corresponds to the adjusting screw.

Further technical solutions are described as follow:
Preferably, the mounting hole may be provided with a mounting seat which comprises a mounting end and a fixing end, and the axis of the mounting end is parallel to the cross-section of the pipe body, and the axis of the fixing end is inclined with respect to the cross-section of the pipe body, and the ultrasonic detecting element is located at the fixing end of the mounting seat.

Preferably, the ultrasonic flow sensor may further include a clasping ring comprising a pressure ring and at least two clasping ears; and the mounting end of the mounting seat is provided with at least two fixing grooves, and each fixing groove comprises circumferentially rotary groove with which an inserting groove is communicated, and the clasping ears are corresponding to the fixing grooves; and on the exposed side of the clasping rings there is provided with at least two disassembling and assembling concaves.

Preferably, the ultrasonic detecting element may be provided with a flange, and a sealing ring is arranged between the clasping ring and the flange.

Preferably, the signal reflecting units may be only two in number.

Preferably, the ultrasonic detecting element may be located above the axis of the pipe body, and the center of the two signal reflecting units is lower than the axis of the pipe body, which is located respectively on the two opposite sides of the axis of the pipe body.

Preferably, the angle between the vertical line of the ultrasonic detecting element and the cross-section is of 15 degrees to 85 degrees.

A method for ultrasonic flow measurement comprises:
emitting an ultrasonic signal by a first ultrasonic detecting element, the ultrasonic signal being inclined with respect toa cross-section of a pipe body;
transmitting the ultrasonic signal to signal reflecting units, whereby the ultrasonic signal is reflected to a second ultrasonic detecting element; and
measuring liquid flow across the pipe body per unit time, based on the distance between two ultrasonic detecting elements and time taken for the ultrasonic signal to be transmitted between the two ultrasonic detecting elements.

Preferably, the ultrasonic detecting element may be a common ultrasonic transducer, the role of which is to convert electrical signals to ultrasonic vibration signals, or vice versa.

The advantages and principles of the present technical solution described above are as follows:
1. In the process of detection, after being emitted by the first ultrasonic detecting element, the ultrasonic signal directly tilts into the pipe body (the ultrasonic signal will not be parallel or perpendicular to the axis of the pipe body), and the ultrasonic signal is transmitted for the first time without reflection, then the ultrasonic vibration signal is transmitted for the second time (or third time) after being reflected by the signal reflecting units, and eventually the ultrasonic signal is received by the second ultrasonic detecting element; and since the two ultrasonic detecting elements are inclined with respect to the pipe body, reliability is improved by reducing at least two of the signal reflections and pressure loss, and since transmission path of the ultrasonic signal is not parallel to the axis of the pipe body, the accuracy of the measurement is also improved;
2. The pipe body is composed of the inner pipe and the outer pipe, during installation, signal reflecting units are firstly provided in the inner pipe, then the inner pipe is inserted into the outer pipe, which is more convenient for installation;
3. The role of the signal reflecting units is to reflect the ultrasonic vibration signal, so that the ultrasonic vibration signals can be accurately transmitted from the first ultrasonic detecting element to the second ultrasonic detecting element, therefore, the position and angle of the signal reflecting units are very important, and in order to ensure the correct installation of the signal reflecting units, the outer pipe is provided with a positioning hole, and the position of the inner pipe can be adjusted by an adjusting screw, and then adjusts the signal reflecting units to ensure the angle of the signal reflecting units. Furthermore, the slippage of the inner pipe within the outer pipe can also be avoided by providing the adjusting annular groove in the inner pipe;
4. Since the ultrasonic detecting elements need to be installed to incline with respect to the pipe body, such installation and processing can be difficult, but the pipe body is provided with the mounting seat, and the fixing end of the mounting seat is inclined, which is convenient for the processing and installation of the ultrasonic detecting elements;
5. During installation, the ultrasonic detecting elements are firstly installed in the mounting seat, followed by the clasping rings, and reaches rotary disassembling and assembling concaves through the tool, then inserts the clasping ears of the clasping rings into the fixing grooves to achieve the fixation of the clasping rings; and during opening, reverse rotary clamping ring can be relieved from the ring to remove the ultrasonic detecting elements, which makes disassembly and assembly of the ultrasonic detecting elements more convenient;
6. The flange on the ultrasonic detecting element matches with the sealing ring, which can prevent fluid leakage and improve the waterproof effect;
7. The number of the signal reflecting units can be reduced since the ultrasonic detecting elements are inclined to the pipe body, and when the number is two, the transmission path of the ultrasonic vibration signals in the pipe body includes at least two straight-line segments, and the signal attenuation is minor, and under this circumstance, the detection effect of the ultrasonic flow sensor is optimal;
8. The ultrasonic detecting element is located above the axis of the pipe body, and the center of the two signal reflecting units is lower than the axis of the pipe body, which is located respectively on the two opposite sides rather than the center of the axis of the pipe body, thus can reduce the impurity accumulation of the pipe body in signal reflecting units and can improve the reliability of the measurement;
9. The angle between vertical line of the ultrasonic detecting element and the cross-section is of 15 degrees to 85 degrees, which can facilitate the setting of the signal reflecting units and can have a better popularity.

### BRIEF DESCRIPTION OF THE DRAWINGS

Fig. 1 is an outline view of the ultrasonic flow sensor described in an embodiment of the present invention;
Fig. 2 is a sectional view of the ultrasonic flow sensor described in an embodiment of the present invention;
Fig. 3 is a top view of the ultrasonic flow sensor described in an embodiment of the present invention;
Fig. 4 is a schematic view of signal transmission of the ultrasonic flow sensor described in an embodiment of the present invention;
Fig. 5 is a structural view of installation of the ultrasonic detecting element described in an embodiment of the present invention;
Fig. 6 is a structural view of the mounting seat described in an embodiment of the present invention;
Fig. 7 is a structural view of the clasping ring described in an embodiment of the present invention;
Fig. 8 is a partially enlarged view of Fig. 6.

### Description of reference number

10. Pipe body
11. Inner pipe
11a. Adjusting annular groove
12. Outer pipe
111. Mounting hole
112. Mounting seat
1121. Mounting end
1122. Fixing end
1123. Fixing groove
11231. Rotary groove
11232. Inserting groove
113. Clasping ring
1131. Pressure ring
1132. Clasping ear
1133. Disassembling and assembling concave
114. Positioning hole
115. Adjusting screw
20. Ultrasonic detecting element
21. Flange
22. Sealing ring
30. Signal reflecting unit

### DETAILED DESCRIPTION OF THE PREFERRED EMBODIMENTS

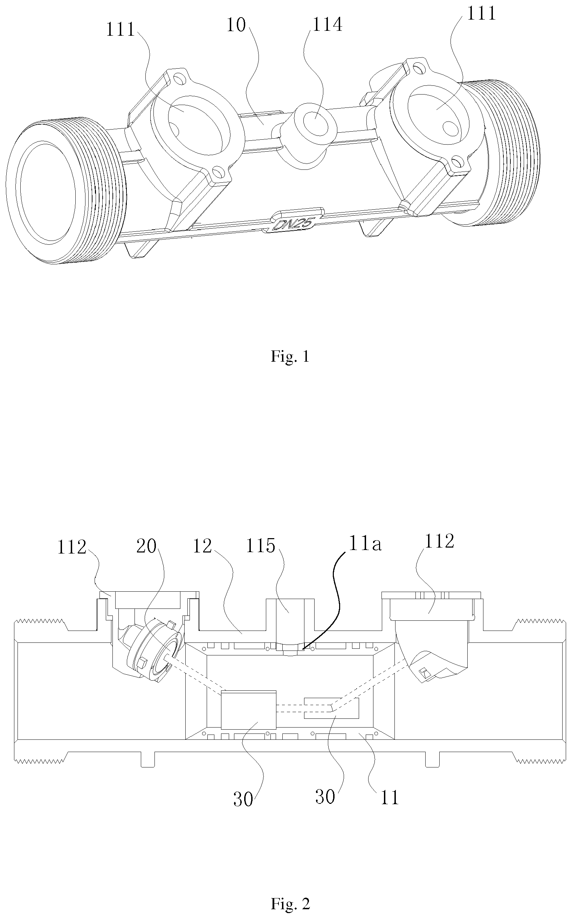

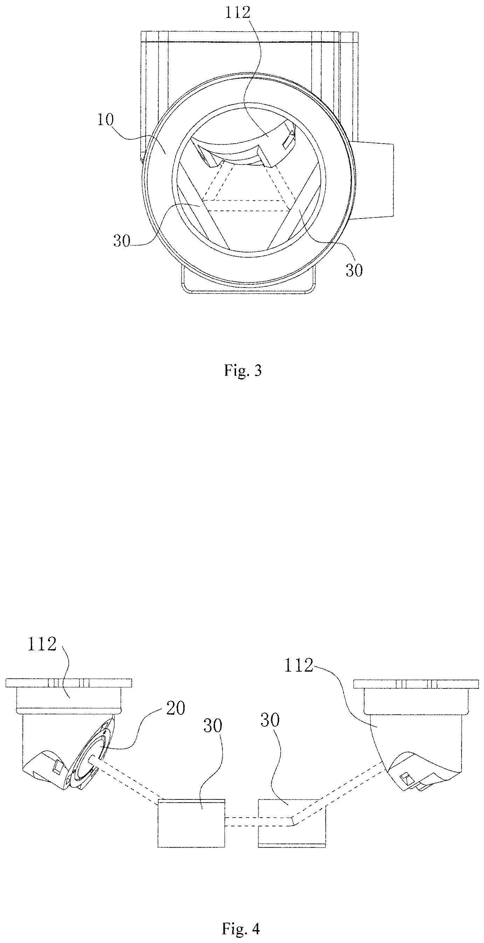

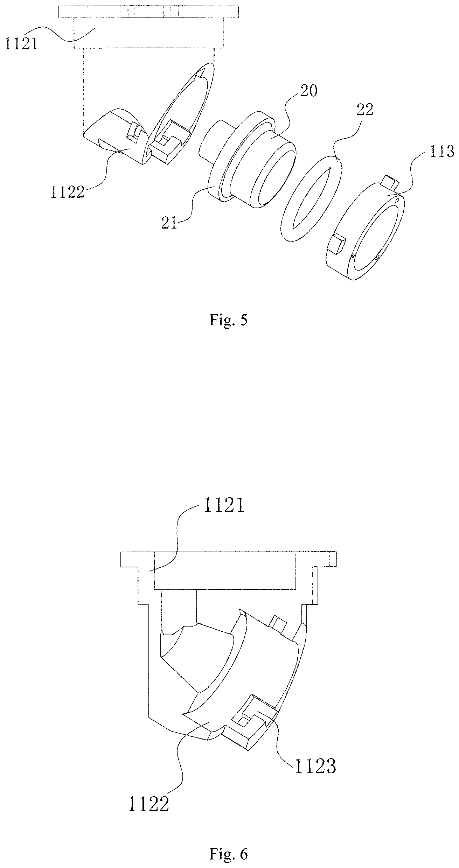

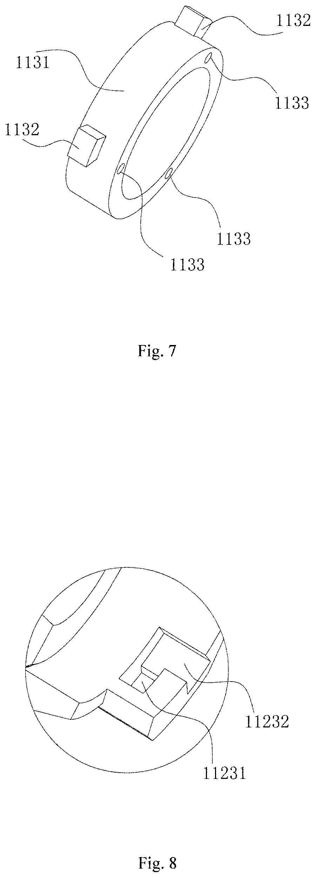

The embodiment of the present invention will be explained in detail with reference to accompanying drawings as follow:
Referring to Fig. 1 to Fig. 8, an ultrasonic flow sensor includes a pipe body 10 with two mounting holes 111. Each mounting hole 111 is equipped with an ultrasonic detecting element 20. Signal reflecting units 30 are provided in the pipe body 10. The cross-section is perpendicular to an axis of the pipe body 10, and the axis of the two ultrasonic detecting elements 20 is inclined with respect to the cross-section of the pipe body 10.

The pipe body 10 includes: an outer pipe 12 and an inner pipe 11 located in the outer pipe 12, and each of the signal reflecting units 30 is located on the inner wall of the inner pipe 11. The outer pipe 12 is provided with a positioning hole 114 which is provided with an adjusting screw 115, and the end of the adjusting screw 115 is pressed on the inner pipe 11. The outer wall of the inner pipe 11 is provided with an adjusting annular groove 11a, which is corresponding to the adjusting screw.

The mounting hole 111 is provided with a mounting seat 112 which includes a mounting end 1121 and a fixing end 1122, and the axis of the mounting end 1121 is parallel to the cross-section of the pipe body 10, and the axis of the fixing end 1122 is inclined with respect to the cross-section of the pipe body 10, and the ultrasonic detecting element 20 is located at the fixing end 1122 of the mounting seat 112. The ultrasonic flow sensor further includes a clasping ring 113 comprising a pressure ring 1131 and at least two clasping ears 1132. The fixing end 1122 of the mounting seat 112 is provided with at least two fixing grooves 1123, and each fixing groove 1123 includes a circumferentially rotary groove 11231 with which an inserting groove 11232 is communicated, and the two clasping ears 1132 are corresponding to the fixing groove 1123; and on exposed side of the clasping rings 113 there is provided with at least two disassembling and assembling concaves 1133. The ultrasonic detecting element 20 is provided with a flange 21, and the sealing ring 22 is provided between the clasping ring 113 and the flange 21.

The signal reflecting units 30 may be only two in number. The ultrasonic detecting element 20 is located above the axis of the pipe body 10, and the center of the two signal reflecting units 30 is lower than the axis of the pipe body 10, which is located respectively on the two opposite sides of the axis of the pipe body 10. The angle between vertical line of the ultrasonic detecting element 20 and the cross-section is of 15 degrees to 85 degrees.

In this embodiment, the method for ultrasonic flow measurement is as follows: a first ultrasonic detecting element 20 emits an ultrasonic signal, which is inclined with respect to the cross-section of the pipe body 10 and is transmitted to the signal reflecting units 30, whereby the ultrasonic signals is reflected to a second ultrasonic detecting element 20. Based on the distance between the two ultrasonic detecting elements 20 and the time that it takes for the ultrasonic signal to be transmitted between the two ultrasonic detecting elements 20, the liquid flow cross the pipe body per unit time is measured.

The present embodiment is characterized by the following advantages:
1. In the process of detecting, after being emitted by the first ultrasonic detecting element 20, the ultrasonic signal directly tilts into the pipe body 10 (the ultrasonic signal will not be parallel or perpendicular to the axis of the pipe body 10), and the ultrasonic signal is transmitted for the first time without reflection, then the ultrasonic vibration signal is being transmitted for the second time (or third time) after being reflected by the signal reflecting units 30, and eventually the ultrasonic signal is received by the second ultrasonic detecting element 20; Since the two ultrasonic detecting elements 20 are inclined with respect to the pipe body 10, reliability are improved by reducing at least two of the signal reflections and pressure loss, and since transmission path of the ultrasonic signal is not parallel to the axis of the tube body 10, the accuracy of the measurement is also improved;
2. The pipe body 10 is composed of the inner pipe 11 and the outer pipe 12, during installation, signal reflecting units 30 are firstly provided in the inner pipe 11, then the inner pipe 11 is inserted into the outer pipe 12, which is more convenient for installation;
3. The role of the signal reflecting units 30 is to reflect the ultrasonic vibration signal, so that the ultrasonic vibration signal can be accurately transmitted from the first ultrasonic detecting element 20 to the second ultrasonic detecting element 20, therefore, the position and angle of the signal reflecting units 30 are very important, and in order to ensure the correct installation of the signal reflecting units 30, the outer pipe 12 is provided with a positioning hole 114, and the position of the inner pipe 11 can be adjusted by an adjusting screw 115, and then adjusts the signal reflecting units 30 to ensure the angle of the signal reflecting units 30. Furthermore, the slippage of the inner pipe 11 within the outer pipe 12 can also be avoided by providing the adjusting annular groove 11a in the inner pipe 11;
4. Since the ultrasonic detecting elements 20 need to be installed to incline with respect to the pipe body 10, such installation and processing can be difficult, but the pipe body 10 is provided with the mounting seat 112, and the fixing end 1122 of the mounting seat 112 is inclined, which is convenient for the processing and installation of the ultrasonic detecting elements 20;
5. During installation, the ultrasonic detecting elements 20 are firstly installed in the mounting seat 112, followed by the clasping rings 113, and reaches rotary disassembling and assembling concaves 1133 through the tool, then inserts the clasping ears 1132 of the clasping rings 113 into the fixing grooves 1123 to achieve the fixation of the clasping rings 113; and during opening, reverse rotary clamping ring 113 can be relieved from the ring to remove the ultrasonic detecting elements, which makes disassembly and assembly of the ultrasonic detecting elements 20 more convenient;
6. The flange 21 on the ultrasonic detecting element 20 matches with a sealing ring 22, which can prevent fluid leakage and improve the effect of waterproof effect;
7. The number of the signal reflecting units 30 can be reduced since the ultrasonic detecting elements 20 is inclined with respect to the pipe body 10, and when the number is two, the transmission path of the ultrasonic vibration signals in the pipe body 10 includes at least two straight-line segments, and the signal attenuation is minor, and under this circumstance, the detection effect of the ultrasonic flow sensor is optimal;
8. The ultrasonic detecting element 20 is located above the axis of the pipe body 10, and the center of the two signal reflecting units 30 is lower than the axis of the pipe body 10, which is located respectively on the two opposite sides rather than the central of the axis of the pipe body 10, thus can reduce the impurity accumulation of the pipe body 10 in signal reflecting units 30 and can improve the reliability of the measurement;
9. The angle between vertical line of the ultrasonic detecting element 20 and the cross-section is of 15 degrees to 85 degrees, which can facilitate the setting of the signal reflecting units 30 and can make a better popularity.

The above description is the detail and specific explanation for embodiments of the present invention, but it is not intended to limit the scope of the present invention. It should be noted that one having ordinary skill in the art would make many equivalent modification and improvement without departing from the scope of the present invention.

## Claims

1. An ultrasonic flow sensor, comprising:
a pipe body (10) with two mounting holes (111);
two ultrasonic detecting elements (20) mounted at the two mounting holes (111) respectively; and
signal reflecting units (30) provided inside the pipe body (10);
wherein an axis of each of the two ultrasonic detecting elements (20) is inclined with respect to a cross-section of the pipe body (10) perpendicular to an axis of the pipe body; the ultrasonic flow sensor being **characterised in that**:
the pipe body (10) further comprises: an outer pipe (12) and an inner pipe (11) sleeved in the outer pipe (12), with each of the signal reflecting units (30) located on an inner wall of the inner pipe (11);
the outer pipe (12) is provided with a positioning hole (114), and an adjusting screw (115) is provided in the positioning hole (114), with an end of the adjusting screw (115) pressed on the inner pipe (11); and
wherein an outer wall of the inner pipe (11) is provided with an adjusting annular groove (11a) which corresponds to the adjusting screw (115).

2. The ultrasonic flow sensor according to claim 1, wherein the mounting hole (111) is provided with a mounting seat (112) comprising a mounting end (1121) and a fixing end (1122), and an axis of the mounting end (1121) is parallel to the cross-section of the pipe body (10), and an axis of the fixing end (1122) is inclined with respect to the cross-section of the pipe body (10), and the ultrasonic detecting element (20) is located at the fixing end (1122) of the mounting seat (112).

3. The ultrasonic flow sensor according to claim 2, wherein the ultrasonic flow sensor further comprises a clasping ring (113) with a pressure ring (1131) and at least two clasping ears (1132); the fixing end (1122) of the mounting seat (112) is provided with at least two fixing grooves (1123), and each fixing groove comprises circumferentially rotary groove (11231) with which the inserting groove (11232) is communicated, and the two clasping ears (1132) are corresponding to the fixing grooves (1123); and at least two disassembling and assembling concaves (1133) are provided on exposed side of the clasping rings (113).

4. The ultrasonic flow sensor according to claim 1, wherein the signal reflecting units (30) are only two in number.

5. The ultrasonic flow sensor according to claim 2, wherein the ultrasonic detecting element (20) is located above the axis of the pipe body (10), the center of the two signal reflecting units (30) is lower than the axis of the pipe body (10), and the two signal reflecting units (30) are located respectively on two opposite sides of the axis of the pipe body (10).

6. The ultrasonic flow sensor according to claim 2, wherein the angle between vertical line of the ultrasonic detecting element (20) and the cross-section is of 15 degrees to 85 degrees.

7. A method for ultrasonic flow measurement, comprising:
providing a pipe body (10) comprising: an outer pipe (12), an inner pipe (11) sleeved in the outer pipe (12), and one or more signal reflecting units (30) being located on an inner wall of the inner pipe (11); wherein the outer pipe (12) is provided with a positioning hole (114), and an adjusting screw (115) is provided in the positioning hole (114), with an end of the adjusting screw (115) pressed on the inner pipe (11); and wherein an outer wall of the inner pipe (11) is provided with an adjusting annular groove (11a) which corresponds to the adjusting screw (115);
emitting an ultrasonic signal by a first ultrasonic detecting element (20), the ultrasonic signal being inclined with respect to a cross-section of the pipe body (10);
transmitting the ultrasonic signal to the signal reflecting units (30), whereby the ultrasonic signal is reflected to a second ultrasonic detecting element (20); and
measuring liquid flow across the pipe body (10) per unit time, based on the distance between two ultrasonic detecting elements (20) and time taken for the ultrasonic signal to be transmitted between the two ultrasonic detecting elements.

## Patentansprüche

1. Ultraschallströmungssensor, umfassend:
einen Rohrkörper (10) mit zwei Montagelöchern (111),
zwei Ultraschallerfassungselemente (20), die jeweils an den zwei Montagelöchern (111) montiert sind, und
Signalreflektionseinheiten (30), die im Inneren des Rohrkörpers (10) bereitgestellt sind, wobei eine Achse jedes der zwei Ultraschallerfassungselemente (20) in Bezug auf einen Querschnitt des Rohrkörpers (10) senkrecht zu einer Achse des Rohrkörpers geneigt ist, der Ultraschallströmungssensor **dadurch gekennzeichnet ist, dass**:
der Rohrkörper (10) ferner Folgendes umfasst: ein äußeres Rohr (12) und ein inneres Rohr (11), das von dem äußeren Rohr (12) umhüllt ist, wobei sich jede der Signalreflektionseinheiten (30) auf einer inneren Wand des inneren Rohrs (11) befindet,
das äußere Rohr (12) mit einem Positionierungsloch (114) bereitgestellt ist und eine Einstellschraube (115) in dem Positionierungsloch (114) bereitgestellt ist, wobei ein Ende der Einstellschraube (115) auf dem inneren Rohr (11) aufgepresst ist, und
wobei eine äußere Wand des inneren Rohrs (11) mit einer ringförmigen Einstellnut (11a) bereitgestellt ist, die der Einstellschraube (115) entspricht.

2. Ultraschallströmungssensor nach Anspruch 1, wobei das Montageloch (111) mit einem Montagesitz (112) bereitgestellt ist, der ein Montageende (1121) und ein Befestigungsende (1122) umfasst, und eine Achse des Montageendes (1121) parallel zu dem Querschnitt des Rohrkörpers (10) ist und eine Achse des Befestigungsendes (1122) in Bezug auf den Querschnitt des Rohrkörpers (10) geneigt ist und sich das Ultraschallerfassungselement (20) an dem Befestigungsende (1122) des Montagesitzes (112) befindet.

3. Ultraschallströmungssensor nach Anspruch 2, wobei der Ultraschallströmungssensor ferner einen Klemmring (113) mit einem Druckring (1131) und mindestens zwei Klemmohren (1132) umfasst, das Befestigungsende (1122) des Montagesitzes (112) mit mindestens zwei Befestigungsnuten (1123) bereitgestellt ist und jede Befestigungsnut umlaufend eine Drehnut (11231) umfasst, mit der die Einsatznut (11232) kommuniziert, und die zwei Klemmohren (1132) den Befestigungsnuten (1123) entsprechen und mindestens zwei demontierende und montierende Konkavitäten (1133) auf einer freigelegten Seite der Klemmringe (113) bereitgestellt sind.

4. Ultraschallströmungssensor nach Anspruch 1, wobei die Signalreflektionseinheiten (30) nur zwei an der Zahl sind.

5. Ultraschallströmungssensor nach Anspruch 2, wobei sich das Ultraschallerfassungselement (20) über der Achse des Rohrkörpers (10) befindet, die Mitte der zwei Signalreflektionseinheiten (30) niedriger ist als die Achse des Rohrkörpers (10) und sich die zwei Signalreflektionseinheiten (30) jeweils auf zwei gegenüberliegenden Seiten der Achse des Rohrkörpers (10) befinden.

6. Ultraschallströmungssensor nach Anspruch 2, wobei der Winkel zwischen einer vertikalen Linie des Ultraschallerfassungselements (20) und dem Querschnitt 15 Grad bis 85 Grad beträgt.

7. Verfahren zum Ultraschallströmungsmessen, umfassend:
Bereitstellen eines Rohrkörpers (10), umfassend: ein äußeres Rohr (12), ein inneres Rohr (11), das von dem äußeren Rohr (12) umhüllt ist, und eine oder mehrere Signalreflektionseinheiten (30), die sich auf einer inneren Wand des inneren Rohrs (11) befinden, wobei das äußere Rohr (12) mit einem Positionierungsloch (114) bereitgestellt ist und eine Einstellschraube (115) in dem Positionierungsloch (114) bereitgestellt ist, wobei ein Ende der Einstellschraube (115) auf dem inneren Rohr (11) aufgepresst ist und wobei eine äußere Wand des inneren Rohrs (11) mit einer ringförmigen Einstellnut (11a) bereitgestellt ist, die der Einstellschraube (115) entspricht.
Abgeben eines Ultraschallsignals durch ein erstes Ultraschallerfassungselement (20), wobei das Ultraschallsignal in Bezug auf einen Querschnitt des Rohrkörpers (10) geneigt ist,
Übertragen des Ultraschallsignals zu den Signalreflektionseinheiten (30), wodurch das Ultraschallsignal zu einem zweiten Ultraschallerfassungselement (20) reflektiert wird, und
Messen von Flüssigkeitsströmung über den Rohrkörper (10) pro Zeiteinheit basierend auf dem Abstand zwischen zwei Ultraschallerfassungselementen (20) und Zeit, die das Ultraschallsignal benötigt, um zwischen den zwei Ultraschallerfassungselementen übertragen zu werden.

## Revendications

1. Capteur d'écoulement à ultrasons, comprenant :
un corps de tuyau (10) ayant deux trous de montage (111) ;
deux éléments de détection à ultrasons (20) montés respectivement au niveau des deux trous de montage (111) ; et
des unités de réflexion de signal (30) agencées à l'intérieur du corps de tuyau (10) ;
dans lequel un axe de chacun des deux éléments de détection à ultrasons (20) est incliné par rapport à une coupe transversale du corps de tuyau (10) perpendiculaire à un axe du corps de tuyau ; le capteur d'écoulement à ultrasons étant **caractérisé en ce que** :
le corps de tuyau (10) comprend en outre : un tuyau extérieur (12) et un tuyau intérieur (11) emmanché dans le tuyau extérieur (12), chacune des unités de réflexion de signal (30) étant situées sur une paroi intérieure du tuyau intérieur (11) ;
le tuyau extérieur (12) est muni d'un trou de positionnement (114), et une vis d'ajustement (115) est agencée dans le trou de positionnement (114), une extrémité de la vis d'ajustement (115) étant pressée sur le tuyau intérieur (11) ; et
dans lequel une paroi extérieure du tuyau intérieur (11) est munie d'une rainure annulaire d'ajustement (11a) qui correspond à la vis d'ajustement (115).

2. Capteur d'écoulement à ultrasons selon la revendication 1, dans lequel le trou de montage (111) est muni d'un siège de montage (112) comprenant une extrémité de montage (1121) et une extrémité de fixation (1122), et un axe de l'extrémité de montage (1121) est parallèle à la coupe transversale du corps de tuyau (10), et un axe de l'extrémité de fixation (1122) est incliné par rapport à la coupe transversale du corps de tuyau (10), et l'élément de détection à ultrasons (20) est positionné à l'extrémité de fixation (1122) du siège de montage (112).

3. Capteur d'écoulement à ultrasons selon la revendication 2, dans lequel le capteur d'écoulement à ultrasons comprend en outre une bague d'attache (113) ayant une bague de pression (1131) et au moins deux oreilles d'attache (1132) ; l'extrémité de fixation (1122) du siège de montage (112) est munie d'au moins deux rainures de fixation (1123), et chaque rainure de fixation comprend une rainure circonférentiellement rotative (11231) avec laquelle communique la rainure d'insertion (11232), et les oreilles d'attache (1132) correspondent aux rainures de fixation (1123) ; et au moins deux parties concaves de désassemblage et d'assemblage (1133) sont agencés sur un côté exposé des bagues d'attache (113).

4. Capteur d'écoulement à ultrasons selon la revendication 1, dans lequel les unités de réflexion de signal (30) sont seulement au nombre de deux.

5. Capteur d'écoulement à ultrasons selon la revendication 2, dans lequel l'élément de détection à ultrasons (20) est situé au-dessus de l'axe du corps de tuyau (10), le centre des deux unités de réflexion de signal (30) est plus bas que l'axe du corps de tuyau (10), et les deux unités de réflexion de signal (30) sont situées respectivement sur deux côtés opposés de l'axe du corps de tuyau (10).

6. Capteur d'écoulement à ultrasons selon la revendication 2, dans lequel l'angle entre une ligne verticale de l'élément de détection à ultrasons (20) et la coupe transversale est compris entre 15 degrés et 85 degrés.

7. Procédé de mesure d'écoulement à ultrasons, comprenant les étapes consistant à :
fournir un corps de tuyau (10) comprenant : un tuyau extérieur (12), un tuyau intérieur (11) emmanché dans le tuyau extérieur (12), et une ou plusieurs unités de réflexion de signal (30) qui sont situées sur une paroi intérieure du tuyau intérieur (11) ; dans lequel le tuyau extérieur (12) est muni d'un trou de positionnement (114), et une vis d'ajustement (115) est agencée dans le trou de positionnement (114), une extrémité de la vis d'ajustement (115) étant pressée sur le tuyau intérieur (11) ; et dans lequel une paroi extérieure du tuyau intérieur (11) est munie d'une rainure annulaire d'ajustement (11a) qui correspond à la vis d'ajustement (115) ;
émettre un signal à ultrasons par un premier élément de détection à ultrasons (20), le signal à ultrasons étant incliné par rapport à une coupe transversale du corps de tuyau (10) ;
transmettre le signal à ultrasons aux unités de réflexion de signal (30), de sorte que le signal à ultrasons est réfléchi vers un second élément de détection à ultrasons (20) ; et
mesurer un écoulement de liquide à travers le corps de tuyau (10) par unité de temps, sur la base de la distance entre deux éléments de détection à ultrasons (20) et du temps nécessaire pour que le signal à ultrasons soit transmis entre les deux éléments de détection à ultrasons.
